# EUROPÄISCHE PATENTSCHRIFT

(11) **EP 1 778 812 B1**
(45) Veröffentlichungstag und Bekanntmachung des Hinweises auf die Patenterteilung: **16.01.2008**
(21) Anmeldenummer: 05770722.6
(22) Anmeldetag: 30.07.2005
(51) Int. Cl.: C09J 161/32

(54) **BINDEMITTELSYSTEM ENTHALTEND AMINOPLASTHARZE, MINDESTENS EIN ACETAL AUS TEILWEISE ODER VOLLSTÄNDIG VERSEIFTEM POLYVINYLESTER UND ALDEHYD UND SÄURE**
BINDER SYSTEM CONTAINING AMINOPLAST RESINS, AT LEAST ONE ACETAL OF PARTIALLY OR FULLY SAPONIFIED POLYVINYLESTER AND ALDEHYDE AND ACID
SYSTEME DE LIANTS CONTENANT DES RESINES AMINOPLASTES, AU MOINS UN ACETAL CONSTITUE D'UN ESTER POLYVINYLIQUE PARTIELLEMENT OU ENTIEREMENT SAPONIFIE ET D'UN ALDEHYDE, ET DES ACIDES

(30) Priorität: 09.08.2004 DE 102004038785
(43) Veröffentlichungstag der Anmeldung: 02.05.2007
(73) Patentinhaber: BASF Aktiengesellschaft, 67056 Ludwigshafen (DE)
(72) Erfinder: WEINKÖTZ, Stephan, 67434 Neustadt (DE); FUEGER, Klaus, 66969 Lemberg (DE)
(86) Internationale Anmeldenummer: PCT/EP2005/008293
(87) Internationale Veröffentlichungsnummer: WO 2006/015750

(56) Entgegenhaltungen:
- WO-A-01/70898
- DE-B- 1 006 149
- DE-C- 832 290
- US-A- 2 433 098

## Beschreibung

Die vorliegende Erfindung betrifft ein Bindemittelsystem enthaltend Aminoplastharze, mindestens ein Acetal aus teilweise oder vollständig verseiftem Polyvinylester und Aldehyd und Säure. Ferner betrifft die Erfindung ein Verfahren zur Herstellung von verleimten Werkstoffen unter Verwendung des genannten Bindemittelsystems und Holzwerkstoffe, die dieses Bindemittelsystem enthalten.

Im Stand der Technik finden sich vielfältige Vorschläge zur Optimierung von Bindemittelsystemen, um beispielsweise deren Lagerstabilität, Formaldehydemission, Verformbarkeit, Oberflächenqualität, Transparenz, UV-Stabilität und Glanz zu verbessern.

Für diese Zwecke werden dem Bindemittelsystem, d. h. dem Leim aus Aminoplastharz oder dem Härter beinhaltend mindestens eine Säure, sehr verschiedenen Zusatzstoffe zugegeben.

EP-A 501 174 offenbart einen Härter für Hamstoff-Formaldehyd-Bindemittel aufgebaut aus einer wässrigen Emulsion aus Polyvinylacetat mit nachvemetzbaren Gruppen, ein Ammoniumsalz und Harnstoff.

WO 02/68178 beschreibt einen Härter für Aminoplastharze beinhaltend teilweise funktionalisiertes Polyvinylacetat; eine Säure, ein saures Salz und/oder eine Säure generierendes Salz; sowie übliche Additive. Ferner wird ein Verfahren offenbart, in dem der Härter und der Kleber getrennt aufgetragen, danach zusammengeführt und unter Druck ausgehärtet werden.

WO 01170898 beschreibt ein Bindemittelsystem beinhaltend ein verethertes Aminoharz, teilweise funktionalisiertes Polyvinylacetat, organische Säuren und Polyvinylalkohol.

Trotz der vielseitigen Bindemittelsysteme, die im Stand der Technik beschrieben sind, gibt es weiterhin Verbesserungsbedarf in Hinblick auf die Verleimungseigenschaften und die Lagerstabilität.

Die Aufgabe der vorliegenden Erfindung war es, verbesserte Bindemittelsysteme auf Basis von Aminoplastharzen zu finden.

Überraschend wurde ein Bindemittelsystem enthaltend
(a) Aminoplastharz
(b) mindestens ein Acetal aus teilweise oder vollständig verseiftem Polyvinylester und Aldehyd
(c) Säure, ein saures Salz und/oder ein eine Säure generierendes Salz
gefunden, das verbesserte Verleimungseigenschaften aufweist. Ferner wurde ein Härter enthaltend Acetal(e) aus teilweise oder vollständig verseiftem Polyvinylester und Aldehyd gefunden, der eine erhöhte Lagerstabilität aufweist.

Das in dem erfindungsgemäßen Bindemittelsystem verwendete Aminoplastharz ist typischerweise ein Hamstoff-Formaldehyd-, ein Melamin-Hamstoff-Formaldehyd-, ein Melamin-Formaldehyd-Harz oder Mischungen hieraus. Diese Harze können mit Alkoholen, insbesondere Methanol, teilweise oder vollständig verethert sein. Bevorzugt werden veretherte und unveretherte Melamin-Harnstoff-Formaldehyd- und Melamin-Formaldehyd-Harze oder Mischungen hieraus verwendet.

Der Veretherungsgrad der Aminoplastharzmischung aus veretherten und unveretherten Aminoplastharzen liegt vorteilhaft bei 1 bis 95 %. Bevorzugt liegt der Veretherungsgrad bei 10 bis 70 %, insbesondere bei 20 bis 65 %. Der Veretherungsgrad entspricht dem Verhältnis aus der Anzahl der veretherten Methylolgruppen zu der Anzahl aus den veretherten und den unveretherten Methylolgruppen multipliziert mit 100.

Der Anteil der veretherten Aminoplastharze liegt vorteilhaft bei 20 bis 80 Gew.-% bezogen auf die Aminoplastharzmischung (Komponente a)), insbesondere bei 40 bis 60 Gew.-%.

Vorteilhaft wird das Aminoplastharz getrennt von dem Härter hergestellt. Bevorzugt kommt das Aminoplastharz erst nach der Kondensationsreaktion mit dem Härter in Kontakt. Komponenten des Härters sind somit in der Regel nicht in das Aminoplastharz eingearbeitet. Insbesondere kommt das Aminoplastharz erst beim Prozess des Verleimens mit dem Härter in Kontakt.

Im erfindungsgemäßen Bindemittelsystem liegt das Aminoplastharz vorzugsweise mit einer Menge von 5 bis 70 Gew.-% Feststoff (Feststoffgehalt bei 120°C/2h) bezogen auf das Gesamtgewicht des Bindemittelsystems (Feststoffe inklusive Wasser) vor. Bevorzugt liegt das Aminoplastharz mit 15 bis 65 Gew.-% vor, insbesondere mit 25 bis 60 Gew.-%. Der Feststoffgehalt des Aminoplastharzes beträgt in der Regel 50 bis 80 %, bevorzugt 60 bis 75 %.

Die Erfindung betrifft ferner einen Härter für Aminoplastharze enthaltend Acetal(e) aus teilweise oder vollständig verseiften Polyvinylestem und Aldehyden. Die Komponenten (b) und (c) stellen in der Regel den erfindungsgemäßen Härter da.

Als Komponente (b) werden ein oder mehrere Acetale aus teilweise oder vollständig verseiften Polyvinylestem und Aldehyden eingesetzt. Als Aldeyhd werden vorteilhaft ein oder mehrere verzweigte oder unverzweigte C₁- bis C₁₀-Aldehyde, bevorzugt C₁- bis C₄-Aldehyde, insbesondere Formaldehyd, eingesetzt. Als teilweise oder vollständig verseifter Polyvinylester wird vorteilhaft ein C₁- bis C₄-Polyvinylester, bevorzugt Polyvinylacetat, eingesetzt. Es können auch Mischungen aus verseiften Polyvinylestem verwendet werden. Der Verseifungsgrad liegt vorteilhaft bei über 50 %, bevorzugt bei 70 bis 100 %, insbesondere bei 80 bis 100 %. Der teilweise oder vollständig verseifte Polyvinylester weist vorteilhaft ein mittleres Molekulargewicht von 10 000 bis 500 000 auf, insbesondere 20 000 bis 250 000.

Vorteilhaft sind nach der Reaktion von teilweise oder vollständig verseiftem Polyvinylester und Aldehyd zum Acetal 2 bis 80 % der OH-Gruppen des teilweise oder vollständig verseiften Polyvinylesters acetalisiert, bevorzugt 5 bis 60 %, insbesondere 10 bis 40 %. Bevorzugt sind bei einem Verseifungsgrad von über 80 Prozent 2 bis 50 % der OH-Gruppen des zu über 80 Prozent verseiften Polyvinylesters acetalisiert, bevorzugt 10 bis 40 %, insbesondere 20 bis 30 %.

Die Acetalisierungsreaktion ist ein reversibler Prozess, wobei das Gleichgewicht auf der Seite der Acetals liegt (siehe N. Nakamura, K. Suzuki, J. Polymer Sci., Part A, 1996, 34, 3319-3328 und K. Fijii, et al., Polymer Letters 1963, 1, 693-696). Im Stand der Technik (beispielsweise I. Pollers, et al., Macromolecules 1996, 29, 5875-5881) werden unterschiedliche Methoden zur Synthese von Polyvinylformal beschrieben. Diese verschiedenen Herstellweisen können zu einer unterschiedlichen Verteilung der Acetale im Polyvinylformal führen. Bei der sogenannten "heterogeneous method" tritt verstärkt eine blockweise Acetalisierung auf, wobei bei der sogenannten "precipitation method" eher eine willkürliche Verteilung vorliegt.

Die als Komponente (b) eingesetzten Acetale können mit Hilfe aller dem Fachmann bekannten Methoden hergestellt werden.

Beispielsweise kann das Copolymer hergestellt werden, in dem zu dem in Wasser gelöstem, verseiftem Polyvinylester Säure und anschließend Aldehyd gegeben wird und diese Mischung auf 50 bis 100°C, bevorzugt 70 bis 100°C, insbesondere 80 bis 90°C erwärmt wird. Bei dieser Temperatur wird das Reaktionsgemisch für eine Dauer von typischerweise 30 min bis 6 Stunden gehalten. Unter Verwendung von Formaldehyd kommt dieser üblicherweise in Form konzentrierter wässriger Lösungen, beispielsweise als 20 bis 60 gewichtsprozentige wässrige Lösung, bevorzugt als 40 bis 55 gewichtsprozentige Lösung, zum Einsatz.

Die Verteilung der Acetalgruppen ist bevorzugt willkürlich. Das gebildete Acetal weist vorteilhaft eine Viskosität bei 20°C von 500 bis 10 000 mPas auf (10 %ige Lösung in Wasser).

Im erfindungsgemäßen Bindemittelsystem liegt die Komponente (b) in einer Menge von 0,1 bis 15 Gew.-% bezogen auf das Gesamtgewicht des Bindemittels vor. Bevorzugt liegt die Komponente (b) mit 0,5 bis 10 Gew.-% vor, insbesondere mit 1 bis 6 Gew.-%.

Das erfindungsgemäße Bindemittelsystem enthält mindestens eine Säure, ein saures Salz und/oder ein Säure generierendes Salz (Komponente (c)). Die Wahl der Säure, bzw. des Salzes hängt mit den Charakteristika des Härters zusammen, beispielsweise, wie schnell die Aushärtung nach dem Vermischen des Aminoplastharzes und des Härters erfolgen soll.

Typischerweise werden als Säuren organische Säuren, wie beispielsweise Maleinsäure, Zitronensäure oder Ameisensäure, oder anorganische Säuren, wie beispielsweise Phosphorsäure oder Sulfamidsäure oder Mischungen hieraus verwendet. Bevorzugt sind organische Säuren, insbesondere Ameisensäure.

Unter sauren Salzen werden solche verstanden, die in Wasser eine saure Lösung bilden. Vorteilhaft werden Aluminiumphosphat, Aluminiumnitrat, Aluminiumsulfat oder Aluminiumchlorid oder Mischungen hieraus verwendet.

Unter einem eine Säure generierenden Salz werden solche Salze verstanden, die durch Reaktion mit einer Komponente des Bindemittelsystems eine Säure generieren. Vorteilhaft werden Ammoniumsalze verwendet, wie beispielsweise Ammoniumphosphat, Ammoniumsulfat und/oder Ammoniumchlorid.

Im erfindungsgemäßen Bindemittelsystem liegt die Komponente (c) mit einer Menge von 0,5 bis 30 Gew.-% bezogen auf das Gesamtgewicht des Bindemittelsystems vor. Bevorzugt liegt die Komponente (c) mit 1 bis 20 Gew.-% vor, insbesondere mit 1,5 bis 15 Gew.-%.

Die Komponente (c) kann vorteilhaft teilweise oder vollständig bei der Herstellung des Acetals vorliegen.

Ferner kann der Härter zusätlich als Komponente (d) ein Polymer in Form einer Dispersion und/oder als wasserlösliche Polymerlösung und/oder Mischungen von verschiedenen Polymerdispersionen oder wässrigen Polymerlösungen enthalten.

Das Polymer ist typischerweise ein Homopolymer oder ein Copolymer hergestellt aus einem oder mehreren ethylenisch ungesättigten Monomeren. Beispiele vorteilhafter ethylenisch ungesättigter Monomere sind Vinylmonomere, wie Vinylester, zum Beispiel Vinylacetat, Vinylpropionat, Vinylbutyrat und Comonomere hiervon; Polyacrylate wie beispielsweise Alkylester von acrylischen oder methacrylischen Säuren, wie Methylacrylat, Methylmethacrylat, Ethylacrylat, n-Butylacrylat etc.; Butadien-Styrol und Derivate wie beispielsweise carboxyliertes Butadien-Styrol; substituierte oder unsubstituierte Mono- und Dialkylester der alpha, beta- ungesättigten (Di)Carboxylsäuren wie beispielsweise substituierte und unsubstituierte Mono- und Dibutyl-, und Mono- und Diethylester der Maleinsäure oder die korrespondierenden Ester der Fumarsäure, Zitronensäure oder Itaconsäure, Crotonsäure, (Meth)Acrylsäure; Polyurethane, Polyvinylalkohol. Bevorzugt sind Polyvinylacetate und Vinylacetat-Copolymere, insbesondere Ethylen-Vinylacetat-Copolymere. Vorteilhaft enthält das Polymer mindestens 50 Gew.-%, bezogen auf das Gesamtgewicht des Monomers Vinylacetat.

Die Polymerdispersion kann Polymere mit nachvernetzbaren Gruppen enthalten. Diese nachvernetzbaren Gruppen können via Copolymerisation in das Polymer eingeführt werden, in dem ein oder mehrere ethylenisch ungesättigte Monomere mit mindestens einem Monomer beinhaltend mindestens eine nachvemetzbare Gruppen umgesetzt wird. Das Polymer enthält bevorzugt 0 bis 10 Gew.-% an Monomeren mit nachvemetzbaren Gruppen, bevorzugt 0 bis 5 Gew.-%. Mischungen aus Polymeren mit nachvernetzbaren Gruppen und Polymeren ohne nachvemetzbare Gruppen sind ferner bevorzugt, insbesondere Mischungen mit Homo- oder Copolymeren des Vinylacetats. Unter nachvemetzbaren Gruppen werden solche verstanden, die von geringerer Reaktivität sind als ungesättigte Gruppen und somit nicht an der ersten Polymerisationsreaktion beteiligt sind, sondern nur unter bestimmten Bedingungen, beispielsweise sauren Bedingungen, mit anderen reaktiven Gruppen, vorteilhaft am Copolymer und/oder am Aminoplastharz, reagieren.

Geeignete nachvernetzbare Gruppen sind vorteilhaft N-funktionelle Gruppen, beispielhaft sind hier die in der WO 01/70898 und WO 02/068178 genannten erwähnt. Insbesondere geeignet sind Amide, N-Alkylolamide, N-Alkoxymethylamide.

Im erfindungsgemäßen Bindemittelsystem liegt das Polymer, bzw. die Polymermischung, der Komponente (d) mit einer Menge von 0 bis 30 Gew.-% bezogen auf das Gesamtgewicht des Bindemittelsystems vor. Bevorzugt liegt das Polymer mit 1 bis 25 Gew.-% vor, insbesondere mit 3 bis 20 Gew.-%.

Die Komponente (d) kann vorteilhaft teilweise oder vollständig bei der Herstellung des Acetals vorliegen.

Das erfindungsgemäße Bindemittelsystem kann gegebenenfalls übliche Additive (Komponente (e)) im Aminoplastharz und/oder im Härter enthalten (siehe beispielsweise M. Dunky, P. Niemz, Holzwerkstoffe und Leime, Technologie und Einflussfaktoren, Springer, 2002, Seite 436 - 444, Kapitel 2.7 "Zusatzstoffe"). Hierzu zählen Füllstoffe (siehe Zeppenfeld, Klebstoffe in der Holz- und Möbelindustrie, Buchverlag Leipzig, 1. Auflage) wie beispielsweise Erdalkalisilikate, Aluminiumsilikate wie Kaolin, Kieselerde, pyrogene und gefällte Kieselsäuren, Erdalkalicarbonate, Erdalkalisulfate, Metalloxide, Fasern wie beispielsweise Glas, Glimmer, Cellulose. Weitere Zusatzstoffe sind vorteilhaft Mehle, Stärken, modifizierte Stärke, modifizierte Cellulose, beispielsweise Methylcellulose, Carboxymethylcellulose, Hydroxyethylcellulose, Verdicker wie in der WO 02/68178 genannt, Farbstoffe, Formaldehydfänger, Tenside, Entschäumer, Lösungsmittel wie beispielsweise Diethylengylkol sowie weitere dem Fachmann bekannte Additive. Bevorzugt werden Kaoline, Kieselsäuren, Cellulosederivate, Glykole und Tenside verwendet.

Die Komponente (e) kann entweder in dem Härter oder im Aminoplast oder in beiden Komponenten vorhanden sein, vorteilhaft ist die Komponente (e) zu 0 bis 20 Gew.-%, bevorzugt 0 bis 10 Gew.-%, in dem Härter und zu 0 bis 20 Gew.-%, bevorzugt 0 bis 10 Gew.-%, in dem Aminoplast vorhanden. Im erfindungsgemäßen Bindemittelsystem liegen die üblichen Additive mit einer Menge von 0 bis 25 Gew.-% bezogen auf das Gesamtgewicht des Bindemittelsystems vor. Bevorzugt liegen die üblichen Additive mit 0 bis 10 Gew.-% vor, insbesondere mit 0 bis 5 Gew.-%.

Der Härter hat üblicherweise einen pH-Wert von 1 bis 6,5, insbesondere 1,3 bis 3. Die Viskosität des Härters liegt bevorzugt über 300 mPas, besonders bevorzugt über 1000 mPas (bei Raumtemperatur und einer Scherrate von 100 s⁻¹). Er zeigt vorteilhaft ein pseudoplastisches Verhalten. Der Wirkstoffgehalt des Härters ((b)+(c)+ggf. (d) + ggf. (e)) liegt zwischen 10 und 70 Gew.-%, bevorzugt zwischen 20 und 55 Gew.-%, der restliche Anteil besteht aus Wasser.

Die für das Bindemittelsystem angegebenen Gewichtsprozente der Komponenten (a) bis (e) beziehen sich auf die reinen, nicht-wässrigen Einsatzstoffe. Die Mengenangaben der Komponenten (a) bis (e) ergänzen sich mit Wasser auf 100 Gew.-%. Der Feststoffgehalt bzw. Wirkstoffgehalt des Bindemittelsystems liegt in der Regel bei 25 bis 75 Gew.-%, bevorzugt bei 40 bis 65 Gew.-%, der restliche Anteil besteht aus Wasser. Obwohl ein flüssiges Bindemittelsystem bevorzugt ist, ist auch ein pulverförmiges Bindemittelsystem möglich.

Das erfindungsgemäße Bindemittelsystem ist besonders zum Verleimen von Werkstoffen geeignet. Es kann hergestellt werden, in dem die Komponenten (a) mit (b), (c) und gegebenenfalls (d) und/oder (e) gemischt werden. Danach wird das Bindemittelsystem auf das zu verleimende Holz aufgetragen.

Vorteilhaft wird das Aminoplastharz [(a) und ggf. (e)] getrennt von dem Härter [(b), (c) und ggf. (d) und/oder (e)] auf den Werkstoff aufgetragen und erst beim Pressen mit diesem gemischt.

Das Aminoplastharz kann aber auch gemischt mit der Komponente (b) getrennt von den Komponenten (c) und gegebenenfalls (d) aufgetragen werden. Ferner kann das Aminoplastharz gemischt mit der Komponente (d) getrennt von den Komponenten (b) und (c) aufgetragen werden. Die Komponente (e) kann in beiden Fällen in allen Komponentengemischen vorhanden sein.

Bevorzugt wird das Aminoplastharz getrennt von dem Härter beinhaltend (b) und (c) und gegebenenfalls (d) aufgetragen, wobei die Komponente (e) in beiden Gemischen vorliegen kann.

Die beiden Komponenten können jeweils in Form von Streifen, Punkten, in Form von Filmen und/oder als Spray aufgetragen werden. Die Gesamtauftragsmenge liegt in der Regel bei 20 bis 500 g/m², insbesondere bei 250 bis 450 g/m².

Das erfindungsgemäße Bindemittelsystem ist nicht beschränkt auf eine spezielle Anwendung, jedoch wird es vorteilhaft in der Holzindustrie verwendet. Die Erfindung umfasst somit den Holzwerkstoff, der das erfindungsgemäße Bindemittel enthält. Das Bindemittelsystem wird bevorzugt zum flächigen Verleimen von Holz verwendet beispielsweise bei Parkett, Rollenheißkaschierungen (Folien auf beispielsweise Spanplatten), Furnieren, Sperrholz, Einschichtplatten, Mehrschichtplatten und Schalungsplatten. Insbesondere wird das Bindemittelsystem zum flächigen Verleimen für tragende Anwendungen, beispielsweise bei Brettschichtholz, Duo- oder Triobalken verwendet (siehe auch WO 02/068178 oder EP-A 860 251).

Im Rahmen dieser Erfindung sind unter dem Begriff "Holzwerkstoff" Materialien zu verstehen, die durch Zerkleinern von Holz und anschließendes Zusammenfügen der Strukturelemente erzeugt werden. Je nach Größe und Form der Strukturelemente unterscheidet man zwischen Vollholz-, Furnier-, Span-, Faser- und Verbund-Werkstoffen (siehe M. Dunky, P. Niemz, Holzwerkstoffe und Leime, Technologie und Einflussfaktoren, Springer, 2002, Seite 3 - 8).

### Beispiele:

### Bindemittel 1 (erfindungsgemäß):

- Leim:: Als Leim (Komponente a)) wurde ein mit Methanol verethertes Aminoplastharz mit einem Feststoffgehalt von 70 % (120°C, 2h) und einem Veretherungsgrad von 33 % verwendet.
- Härter:: Der Härter (Komponenten b) und c)) wurde durch Umsetzung von 13 Teilen Polyvinylalkohol in 100 Teilen Wasser mit 26,8 Teilen Ameisensäure (85 %ig) und 3,3 Teilen wässriger Formaldehyd-Lösung (40 %ig) hergestellt. Die Lösung wurde 4 h bei 85°C gerührt.
Als Komponente d) wurde eine handelsübliche Dispersion eines Vinylacetat-Ethylen-Copolymers zugesetzt.

### Bindemittel 2 (Vergleichsbeispiel analog der Erfindung WO 01/70898):

- Leim:: Als Leim (Komponente a)) wurde ein handelsübliches mit Methanol verethertes Aminoplastharz mit einem Feststoffgehalt von 70 % (120°C, 2 h) und einem Veretherungsgrad von 33 % verwendet.
- Härter:: Der Härter enthielt 13 Teile nicht acetalisierten Polyvinylalkohol und 26,8 Teile Ameisensäure (85 %ig) in 103 Teilen Wasser.
Als Komponente d) wurde eine handelsübliche Dispersion eines Vinylacetat-Ethylen-Copolymers eingesetzt.

Die handelsübliche Dispersion eines Vinylacetat-Ethylen-Copolymers lag in den Härtern in einer Menge vor, so dass der Feststoffanteil der Dispersion bezogen auf die Mischung 20 % betrug.

Lagerstabilität der Härter bestehend aus den Komponenten b) bis d):

**Tabelle 1: Lagerstabilität**

| Härter | Anfangsviskosität [mPas] | Viskosität nach 120 Tagen [mPas] |
|---|---|---|
| Härter des Bindemittels 1 | 2837 | 2958 |
| Härter des Bindemittels 2 | 1500 | 3635 |

### Anwendungstechnische Prüfung:

Der Leim und der Härter der Bindemittel 1 und 2 wurden getrennt auf Fichtenlamellen aufgetragen, wobei der Härter in Form von Schnüren und der Leim in Form eines Films aufgetragen wurden. Die Gesamtauftragsmenge betrug 400 g/m² und das Gewichtsverhältnis von Leim zu Härter 1:1. Aus den Lamellen wurde Brettschichtholz hergestellt. Die Presszeit betrug 2,5 h bei 25°C, der Pressdruck 0,8 N/mm².

15 min nach dem Öffnen der Presse wurden Blockscherprüfungen an Querschnittsprobekörpem (5 cm x 5 cm) durchgeführt (EN 386). Weiterhin wurde nach 3 Tagen eine Delaminierungsprüfung nach EN 391-B durchgeführt. Folgende Ergebnisse wurden erhalten.

**Tabelle 2: Ergebnisse der anwendungstechnischen Prüfungen**

| Bindemittel | Scherfestigkeit [N/mm²] | Delaminierung [%] |
|---|---|---|
| | (EN 386) | (EN 391-B) |
| Bindemittel 1 | 6,3 | 1,6 |
| Bindemittel 2 | 4,7 | 7,2 |

## Patentansprüche

1. Bindemittelsystem enthaltend
(a) von 15 bis 70 Gew.-% Aminoplastharz,
(b) von 0,1 bis 15 Gew.-% mindestens ein Acetal aus teilweise oder vollständig verseiftem Polyvinylester und Formaldehyd,
(c) von 0,5 bis 30 Gew.-% Säure, ein saures Salz und/oder ein eine Säure generierendes Salz,
(d) von 0 bis 30 Gew.-% Polymer(e) in Form einer Dispersion oder als wasserlösliche Polymerlösung, und
(e) von 0 bis 25 Gew.-% übliche Additive,
jeweils bezogen auf das Gesamtgewicht des Bindemittelsystems.

2. Bindemittelsystem nach Anspruch 1, wobei man als Komponente (b) Acetale aus teilweise oder vollständig verseiftem Polyvinylacetat und Formaldehyd verwendet.

3. Bindemittelsystem nach den Ansprüchen 1 oder 2, wobei der Verseifungsgrad des Polyvinylesters größer als 50 Prozent ist.

4. Bindemittelsystem nach den Ansprüchen 1 bis 3, wobei der teilweise oder vollständig verseifte Polyvinylester ein mittleres Molekulargewicht von 10 000 bis 500 000 aufweist.

5. Bindemittelsystem nach den Ansprüchen 1 bis 4, wobei im Acetal 2 bis 80 Prozent der OH-Gruppen des teilweise oder vollständig verseiftem Polyvinylesters acetalisiert sind.

6. Bindemittelsystem nach den Ansprüchen 1 bis 5, wobei eine 10 gewichtsprozentige Lösung des Acetals in Wasser eine Viskosität von 500 bis 10 000 mPas aufweist.

7. Bindemittelsystem nach den Ansprüchen 1 bis 6, worin die Komponenten (a) bis (e) in folgenden Mengen bezogen auf das Gesamtgewicht des Bindemittelsystems vorliegen:
(a) von 25 bis 70 Gew.-%,
(b) von 0,5 bis 10 Gew.-%,
(c) von 1 bis 20 Gew.-%,
(d) von 1 bis 25 Gew.-%,
(e) von 0 bis 10 Gew.-%,
jeweils bezogen auf das Gesamtgewicht des Bindemittelsystems.

8. Bindemittelsystem nach den Ansprüchen 1 bis 7, worin als Aminoplastharz ein verethertes oder unverethertes Melamin-Harnstoff-Formaldehyd-Harz, ein verethertes oder unverethertes Melamin-Formaldehyd-Harz oder Mischungen hieraus eingesetzt werden.

9. Verwendung von Härtern für Aminoplastharze enthaltend Acetal(e) aus teilweise oder vollständig verseiften Polyvinylestern und Formaldehyd.

10. Verwendung nach Anspruch 9, wobei das Aminoplastharz ein verethertes Aminoplastharz oder eine Mischung aus einem veretherten und unveretherten Aminoplastharz ist.

11. Verfahren zum Verleimen von Holz, **dadurch gekennzeichnet, dass** man ein Bindemittelsystem enthaltend
(a) Aminoplastharz
(b) mindestens ein Acetal aus teilweise oder vollständig verseiftem Polyvinylester und Aldehyd
(c) Säure, ein saures Salz und/oder ein eine Säure generierendes Salz
auf das Holz aufträgt.

12. Holzwerkstoff, enthaltend ein Bindemittel gemäß den Ansprüchen 1 bis 8.

## Claims

1. A binder system comprising
(a) from 15 to 70% by weight of aminoplast resin
(b) from 0.1 to 15% by weight of at least one acetal of partly or completely hydrolyzed polyvinyl ester and formaldehyde
(c) from 0.5 to 30% by weight of acid, an acidic salt and/or an acid-generating salt,
(d) from 0 to 30% by weight of polymer(s) in the form of a dispersion or as a water-soluble polymer solution, and
(e) from 0 to 25% by weight of conventional additives,
based on the total weight of the binder system.

2. The binder system according to claim 1, wherein acetals of partly or completely hydrolyzed polyvinyl acetate and formaldehyde are used as component (b).

3. The binder system according to claim 1 or 2, wherein the degree of hydrolysis of the polyvinyl ester is greater than 50 percent.

4. The binder system according to any of claims 1 to 3, wherein the partly or completely hydrolyzed polyvinyl ester has an average molecular weight of from 10 000 to 500 000.

5. The binder system according to any of claims 1 to 4, wherein, in the acetal, from 2 to 80 percent of the OH groups of the partly or completely hydrolyzed polyvinyl ester have been acetalated.

6. The binder system according to any of claims 1 to 5, wherein a 10 percent strength by weight solution of the acetal in water has a viscosity of from 500 to 10 000 mPa.s.

7. The binder system according to any of claims 1 to 6, wherein the components (a) to (e) are present in the following amounts, based on the total weight of the binder system:
(a) from 25 to 70% by weight,
(b) from 0.5 to 10% by weight,
(c) from 1 to 20% by weight,
(d) from 1 to 25% by weight,
(e) from 0 to 10% by weight,
based on the total weight of the binder system

8. The binder system according to any of claims 1 to 7, wherein an etherified or unetherified melamine/urea/formaldehyde resin, an etherified or unetherified melamine/formaldehyde resin or a mixture thereof is used as the aminoplast resin.

9. The use of curing agents for aminoplast resins, comprising acetal(s) of partly or completely hydrolyzed polyvinyl esters and formaldehyde.

10. The use according to claim 9, wherein the aminoplast resin is an etherified aminoplast resin or a mixture of an etherified and an unetherified aminoplast resin.

11. A process for gluing wood, wherein a binder system comprising
(a) aminoplast resin
(b) at least one acetal of partly or completely hydrolyzed polyvinyl ester and aldehyde
(c) acid, an acidic salt and/or an acid-generating salt
is applied to the wood.

12. A wood-base material, comprising a binder according to any of claims 1 to 8.

## Revendications

1. Système d'agents liants contenant :
(a) 15 à 70 % en poids de résine aminoplaste,
(b) 0,1 à 15 % en poids d'au moins un acétal constitué d'ester de poly(ester de vinyle) partiellement ou complètement saponifié et de formaldéhyde,
(c) 0,5 à 30 % en poids d'acide, d'un sel acide et/ou d'un sel générateur d'un acide,
(d) 0 à 30 % en poids d'un ou de plusieurs polymères sous la forme d'une dispersion ou d'une solution de polymères hydrosoluble, et
(e) 0 à 25 % en poids d'additifs habituels,
respectivement par rapport au poids total du système d'agents liants.

2. Système d'agents liants selon la revendication 1, dans lequel on utilise, comme composant (b), des acétals obtenus à partir de poly(acétate de vinyle) partiellement ou complètement saponifié et de formaldéhyde.

3. Système d'agents liants selon la revendication 1 ou 2, dans lequel le degré de saponification du poly(ester de vinyle) est supérieur à 50 %.

4. Système d'agents liants selon les revendications 1 à 3, dans lequel le poly(ester de vinyle) partiellement ou complètement saponifié présente un poids moléculaire moyen de 10 000 à 500 000.

5. Système d'agents liants selon les revendications 1 à 4, dans lequel l'acétal présente 2 à 80 % des groupements OH du poly(ester de vinyle) partiellement ou complètement saponifié convertis en acétal.

6. Système d'agents liants selon les revendications 1 à 5, dans lequel une solution de l'acétal à 10 % en poids dans de l'eau présente une viscosité de 500 à 10 000 mPas.

7. Système d'agents liants selon les revendications 1 à 6, dans lequel les composants (a) à (e) sont présents, par rapport au poids total du système d'agents liants, dans les quantités suivantes :
(a) de 25 à 70 % en poids,
(b) de 0,5 à 10 % en poids,
(c) de 1 à 20 % en poids,
(d) de 1 à 25 % en poids,
(e) de 0 à 10 % en poids,
respectivement par rapport au poids total du système d'agents liants.

8. Système d'agents liants selon les revendications 1 à 7, dans lequel on utilise, comme résine aminoplaste, une résine de mélamine-urée-formaldéhyde éthérifiée ou non, une résine de mélamine-formaldéhyde éthérifiée ou non ou leurs mélanges.

9. Utilisation d'agents durcissants pour des résines aminoplastes contenant un ou plusieurs acétals obtenus à partir de poly(ester de vinyle) partiellement ou complètement saponifiés et de formaldéhyde.

10. Utilisation selon la revendication 9, dans laquelle la résine aminoplaste est une résine aminoplaste éthérifiée ou un mélange de résines aminoplastes éthérifiée et non éthérifiée.

11. Procédé de collage du bois, **caractérisé en ce que** l'on applique sur le bois un système d'agents liants contenant :
(a) de la résine aminoplaste,
(b) au moins un acétal obtenu à partir de poly(ester de vinyle) partiellement ou complètement saponifié et d'aldéhyde,
(c) de l'acide, un sel acide et/ou un sel générateur d'un acide.

12. Matériau dérivé du bois, contenant un agent liant selon les revendications 1 à 8.
